# EUROPEAN PATENT APPLICATION

(11) **EP 1 840 861 A2**
(43) Date of publication of application: **03.10.2007**
(21) Application number: 07447017.0
(22) Date of filing: 09.03.2007
(51) Int. Cl.: G09B 9/36, G09B 9/30

(54) **Forward looking virtual imaging**

(30) Priority: 09.03.2006 US 780728 P
(71) Applicant: Martin, Jose, Stevensville MD 21666 (US)
(72) Inventor: Martin, Jose, Stevensville MD 21666 (US)
(74) Representative: Marchau, Michel F.L.A.

(57) **Abstract**

A method of inputting information from an On-Board Avionics & Instrumentation to a FLVI Engine using a communications interface, determining a navigational state by the FLVI Engine from the information, selecting imagery from a data base, synchronizing the imagery with the navigational state, and outputting the synchronizing images to a display. A forward looking virtual imaging system for an operator of a vehicle having a forward looking virtual imaging engine, where the forward looking virtual imaging engine processes input information, outputs vehicle position data and outputs image data based on the input information and vehicle position data to a display device, and where the display device continuous displays images to the operator in real time that approximates the actual conditions that surround the vehicle.

## Description

### TECHNICAL FIELD AND BACKGROUND

The present invention generally relates to the field of a Forward Looking Virtual Imaging System (FLVI). More specifically, the present invention relates to a synergistic bridge of navigation technologies with simulation imagining technologies to produce a clear simulated real time display of a driver's or pilot's actual position and view out a windshield.

Forward Looking Virtual Imaging or FLVI is an aid to navigation designed to help the crews of the following vehicles: aerospace, surface, maritime and submarine to have synthetic forward and side vision that will result in safer navigation in very low to "0" visual conditions. FLVI synergistically bridges the benefits of navigation technologies with simulation imagining technologies, bringing the benefit of dynamic synthetic vision, embedded simulation and flight review capabilities.

FLVI has many versions such as the following: FLVI-Aero: taxi, take off, approach and landing phases, helicopter/rotary-wing aircraft for helo pads for medical/law enforcement, and tactical operations; FLVI-FLIR: FLIR imagery superimposed on high-resolution panchromatic or multispectral satellite/aerial imagery; FLVI AeroTCAS: traffic information displayed in the synthetic environment; FLVI AeroTerrain: terrain alert by displaying it; FLVI-Marine: "close quarters" navigation such as channels, rivers and harbors; FLVI-Sub-Surface: operations requiring synthetic bathymetric visualization; and FLVI-Surtace: synthetic visualization for all surface vehicles.

In a typical aerospace simulator (SIM) the image generator/viewer (IG) dynamically receives "simulated" "aircraft status" and presents the SIM crew with the forward and/or side looking imagery outside the aircraft. FLVI dynamically integrates "aircraft status" from the "real" aircraft avionics into a modified scene generator to present the crew with a synthetic representation that corresponds to what they would actually see out of the cockpit under clear visibility conditions.

Many serious accidents resulting in fatalities and property damage occur every year worldwide when a vehicle, navigating in very low ceiling and poor visibility conditions, deviates from a correct path and collides with an object or terrain feature or the operator suffers spatial disorientation and loss of vehicle control. Other navigation displays are insufficient in providing information leading pilots to ignore the hazards of significant deviations from course or altitude.

Our brain perceives three-dimensional information much better than information expressed in other ways such as needles, tables, and graphs. High-resolution geo-specific (photo-realistic) imagery and elevation data, along with extracted 3D cuiturat/man-made objects will be presented as a synthetic environment to the operator as either day or night ceiling and visibility unlimited (CAVU) condition for Summer or Winter. In order to maintain interactivity and real-time display of the synthetic environment, the resolution of the terrain model will be adaptively improved according to the position and altitude of the aircraft, vessel, or vehicle through "occlusion culling" (levels of detail). In the highest level of detail (LOD), the imagery, elevation, and 3D features should have enough detail to show the key features of interest and present a high level of realism.

The terrain databases will require periodic revisions and updates as changes to the environment occur or new data sources become available. The frequency of the update and data sources used would depend on the FLVI application. Aerospace applications would use DAFIF data, airborne/satellite imagery, LIDAR/DEM elevation data, and other sources as available. Maritime applications would use Digital Nautical Charts (DNC) and aids to navigations (ATONS) such as channel markers and approaches to ports and harbors. For sub-surface vessels, bathymetric data and obstructions to navigations would be used. Surface applications would use available source data to generate roads, man made objects and terrain features. Military applications would use NGA (National Geospatial Agency) and other DoD specific source data for features of military importance.

FLVI is also a training tool when its operational history is reviewed. FLVI is also an embedded simulation tool. The inherent value of the FLVI system is to display, in real-time, highly accurate virtual imagery of what lays ahead and/or to the side of the vehicle so that the operator can integrate what is in the synthetic environment with the traditional information from navigation instrumentation. Dangers arising from serious deviations from the required correct precision path would become very obvious to the crew when using FLVI and provide an opportunity for immediate corrections or aborts. On the other hand if the vehicle is on the correct precision path, the FLVI will confirm it.

FLVI-Aero will help to prevent CFIT (controlled flight into terrain) as well as "Spatial Disorientation". An example of the value added by FLVI-Aero is aircraft operating in a combination of high terrain and low ceiling and visibility conditions. In many areas of the world NAVAIDS are notoriously unreliable. FLVI would show the crew the dangers ahead and provide additional navigation cues.

### BRIEF DESCRIPTION OF THE DRAWINGS

The present invention will be described by way of exemplary embodiments, but not limitations, illustrated in the accompanying drawings in which like references denote similar elements, and in which:
Figure 1 illustrates a flow chart showing a FLVI in an aircraft, in accordance with one embodiment of the present invention;
Figure 2 illustrates a flow chart showing a FLVI in an aircraft with AHRS, in accordance with one embodiment of the present invention
Figure 3 illustrates a flow chart showing a calibration module, in accordance with one embodiment of the present invention.
Figure 4 illustrates a flow chart showing a FLVI in a vehicle or vessel, in accordance with one embodiment of the present invention.
Figure 5 illustrates a drawing of an implementation of a FLVI in a cockpit in accordance with one embodiment of the present invention; and
Figure 6 illustrates a drawing of an implementation of a FLVI in a cockpit with a pilot, in accordance with one embodiment of the present invention.

### DETAILED DESCRIPTION OF ILLUSTRATIVE EMBODIMENTS

Various aspects of the illustrative embodiments will be described using terms commonly employed by those skilled in the art to convey the substance of their work to others skilled in the art. However, it will be apparent to those skilled in the art that the present invention may be practiced with only some of the described aspects. For purposes of explanation, specific numbers, materials and configurations are set forth in order to provide a thorough understanding of the illustrative embodiments. However, it will be apparent to one skilled in the art that the present invention may be practiced without the specific details. In other instances, well-known features are omitted or simplified in order not to obscure the illustrative embodiments.

Various operations will be described as multiple discrete operations, in turn, in a manner that is most helpful in understanding the present invention, however, the order of description should not be construed as to imply that these operations are necessarily order dependent. In particular, these operations need not be performed in the order of presentation. The phrase in one embodiment is used repeatedly. The phrase generally does not refer to the same embodiment, however, it may. The terms comprising, having and including are synonymous, unless the context dictates otherwise.

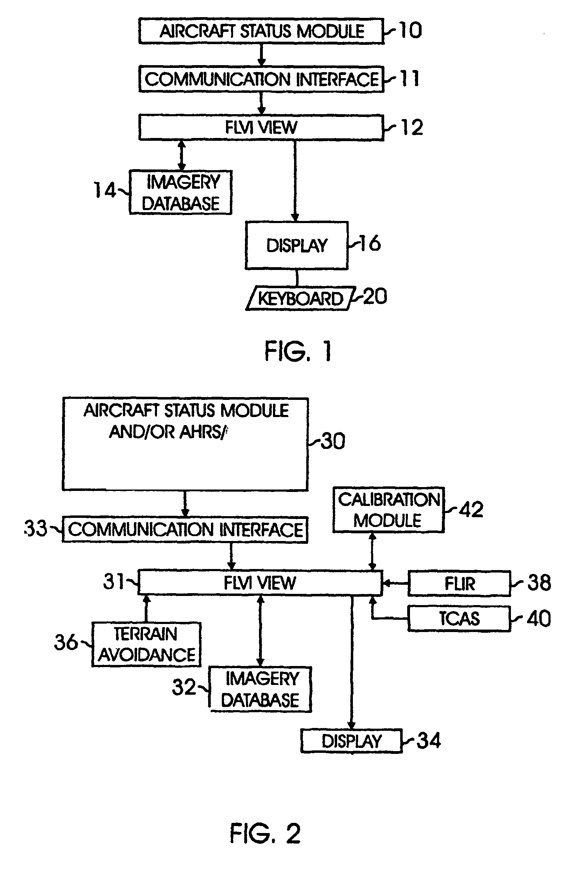

Referring now to Figure 1 as in one embodiment shown is an aircraft status module 10 connected to a communications interface 11 that is connected to a FLVI view 12. The aircraft status module 10 provides status data about the aircraft for example geo-position, udt, elevation, attitude, heading and velocity/acceleration. An imagery database 14 is connected to the FLVI view 12. The imagery database 14 stores imagery data that may be any or all of geo-specific terrain, man made objects, and 3d imagery. The communications interface 11 translates the aircraft status module 10 data and sends it to the FLVI view 12. The FLVI view 12 matches the translated status data from the communications interface 11 with proper imagery data and then outputs the correct imagery based on the translated status data to a display 16. The display 16 may be located in an aircraft cockpit for easy viewing by a pilot. The display 16 may have a keyboard 20 nearby for pilot interaction with the FLVI view 12.

Referring to Figure 2 as in one embodiment shown is an AHRS as part of the aircraft status module 30. AHRS and other key components of a Avionics & Instrumentation Module are part of the aircraft status module 30 and may be connected to a FLVI view 31 through a communications interface 33. AHRS may have GPS and the GPS may have wide area augmentation system (WAAS) or differential GPS (DGPS). AHRS may be coupled to a magnetometer. An imagery database 32 stores imagery data and the FLVI view 31 accesses the imagery database 32 to match status data that has been translated by the communications interface 33 with imagery data to output the proper imagery to a display 34. Terrain avoidance 36, FLIR 38 and TCAS 40 may all provide data to the FLVI view 31 that is then outputted to the display 34 to provide one location for the data. Calibration module 42 is connected to the FLVI view 31 and will provide more accurate imagery to display 34.

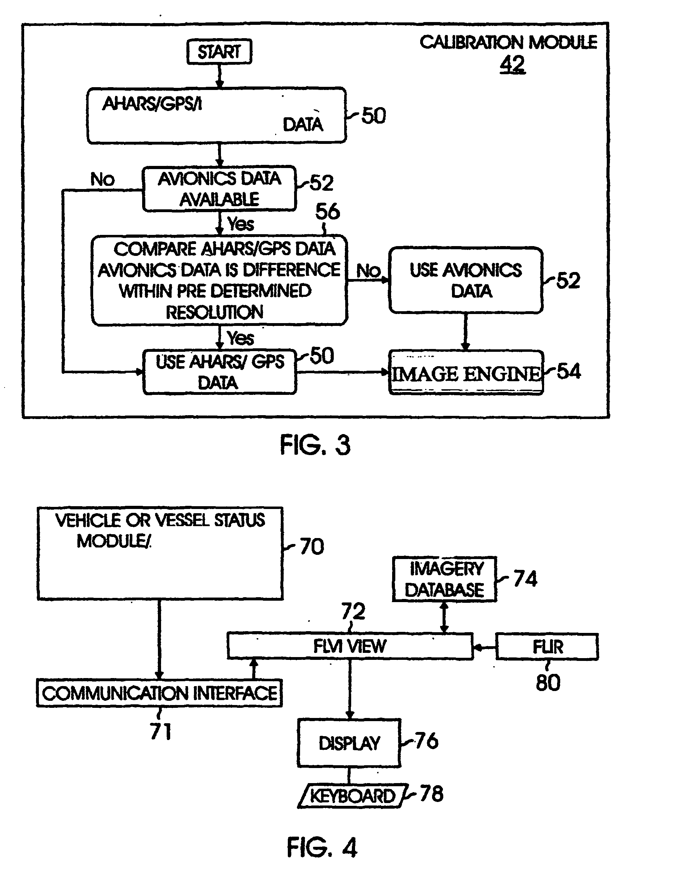

Referring to Figure 3 as in one embodiment shown is the calibration module 42. Calibration module 42 has AHRS/GPS data 50 and avionics data 52 when available. When avionics data 52 is not available then AHRS/GPS data 50 is sent to an Image Engine or FLVI view 54. When avionics data 52 is available then the calibration module 50 compares AHRS/GPS data 50 to avionics data 52 such as a Localizer or Glideslope signal to determine if the difference is within a pre determined resolution 56. If the difference is not within the pre determined resolution then avionics data 52 is sent to the Image Engine or FLVI view 54. If the difference is within the pre determined resolution then AHRS/GPS data 50 is sent to the Image Engine or FLVI view 54. The calibration module 42 in instances were it can capture a more precise signal like a localizer signal of an ILS the calibration module 42 will select the localizer signal for horizontal precision and glide-slope signal for vertical position rather than AHRS/GPS signal. This typically happens during the instrument approach phase of a flight. The FLVI Engine 54 substantially all the time receives AHRS/GPS data the FLVI Engine 54 will know when to pick up more precise data such as those from an ILS and switch to the more precise data when appropriate or available.

Referring to Figure 4 as in one embodiment shown is a vehicle or vessel status module 70 connected to a communications interface 71 and the communications interface 71 is connected to a FLVI view 72. The vehicle or vessel status module 70 provides status data about the vehicle or vessel for example geo-position, UDT, elevation, attitude, heading and velocity/acceleration. An imagery database 74 is connected to the FLVI view 72. The imagery database 74 stores imagery data that may be any or all of geo-specific terrain, man made objects, and 3d imagery. The FLVI view 72 matches the status data after it has been translated by the communications interface 71 with proper imagery data and then outputs the correct imagery based on the translated status data to a display 76. The display 76 may be located on an instrument panel or bridge instrumentation for easy viewing by a captain or driver. The display 76 may have a keyboard 78 nearby for user interaction with the FLVI view 72. A FLIR 80 may be connected to FLVI view 72 for boat applications and FLIR 80 data may be shown on display 76.

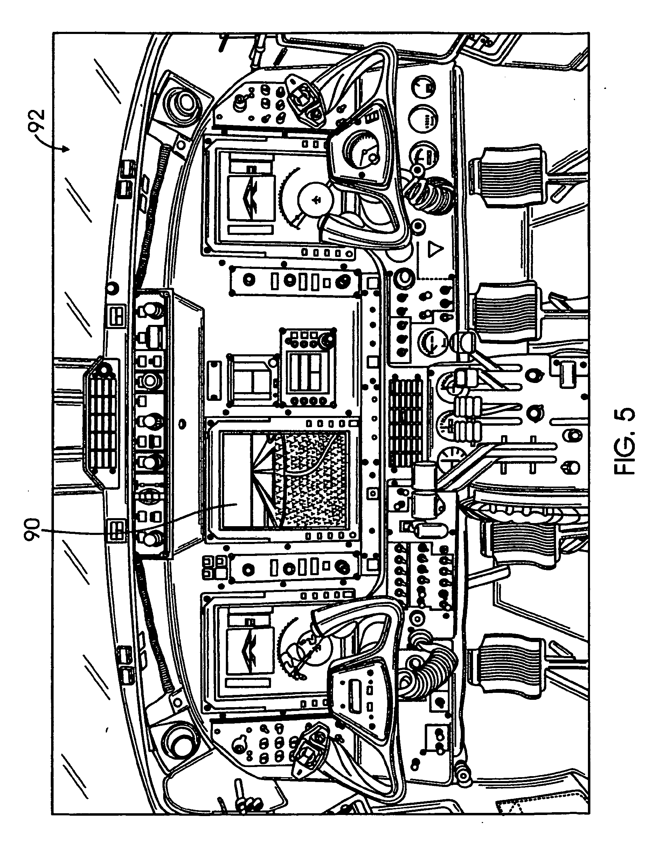

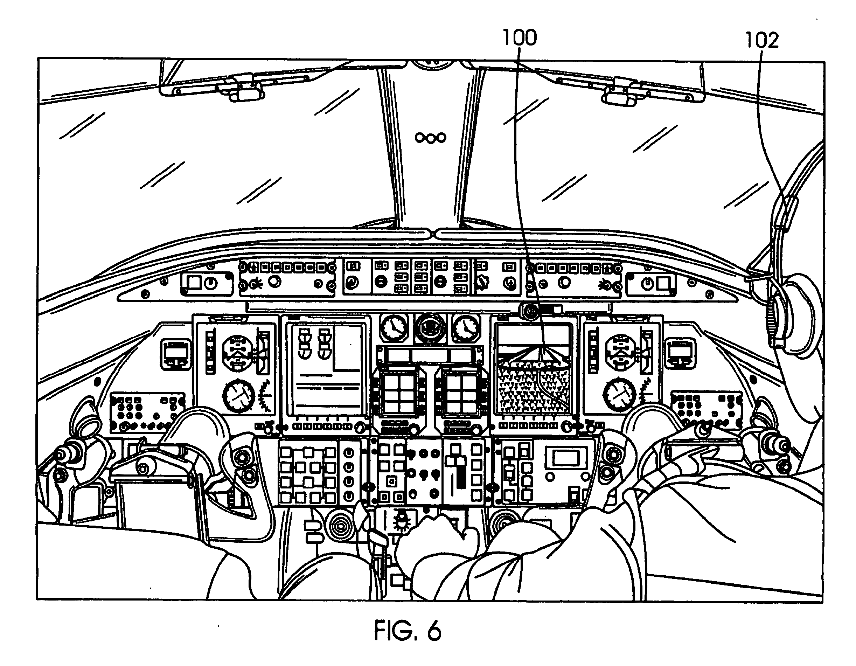

Figure 5 shows a display 90 of a FLVI view or image engine in a cockpit 92 of an airplane. Figure 6 shows a display 100 positioned for easy viewing by a pilot 102.

The present invention is a forward looking virtual imaging (FLVI) system for an operator of a vehicle, the forward looking virtual imaging system comprising a forward looking virtual imaging engine, where the forward looking virtual imaging engine processes input information, outputs vehicle position data and outputs image data based on the input information and vehicle position data to a display device, and where the display device continuously displays images to the operator in real time that approximates the actual conditions that would be seen in front of the vehicle.

The display device may comprise one or more of the following display systems and in any combination: a graphics tablet, a heads-up display (HUD), a composite with attitude indicator, an electronic flight instrumentation system (EFIS), a navigation (NAV) display, a laptop, a night vision device and an infrared vision system.

The forward looking virtual imaging engine may comprise hardware including one or more and in any combination a high clock speed computer, high speed memory, high speed storage and a graphics accelerator board.

The forward looking virtual imaging engine may comprise software including one or more and in any combination an operator interface, image management software, an averaging algorithm and a photo-realism database.

The vehicle may be an aircraft, and the vehicle position data may comprise geo-positional-altitude-universal time date data, heading, velocity/acceleration and aircraft attitude in pitch, roll and yaw.

The input data to a communications interface may comprise data derived from one or more and in any combination typically found in precision and non precision avionics and instrumentation such as: AHRS / GPS / DGPS / WAAS/ Magnetometer an instrument landing system (ILS), a very high frequency (VHF) omni-directional radio-range system (VOR), an automatic direction finder (ADF), radar, a weather (Wx) information system, air traffic control (ATC) data, attitude instrumentation , autopilot system, a directional gyro, turn and bank coordinators, a horizontal situation indicator (HIS), altitude instrumentation, a transponder encoder, geographical real-time data of altitude, position and time, forward looking infrared radar (FLIR), a terrain alert system, traffic conflict and alert system (TCAS) and Navionics for marine applications.

Aircraft-Vessel-Vehicle Status Module may have a typical Installation using Inertial Systems. These devices typically utilize MEMS-based inertial sensors and GPS technology in its different variants, GPSWAA, DGPS, etc. The system architecture is designed to combine the functions of an IMU (Inertial Measurement Unit), VG (Vertical Gyros), GPS (Global Positioning System) and AHRS (Attitude & Heading Reference System) in a compact environmentally sealed enclosure with built-in EMI protection.

Some installations may require the use of a separate Magnetometer, like the ones used in Marine Stabilization. This solid state "strapdown" configuration avoids the performance limitations of typical gimbaled systems and offers improved reliability. A 3-axis fluxgate magnetometer and 3-axis micromachined accelerometer are combined with digital signal processing electronics and fully integrated within a small diameter pressure rated housing.

A version of these Magnetometers is the Heading Sensor with typical accuracies of 0.5 RMS. They can operate in dynamic environments with 360 degrees of continuous roll. RS232 or RS422 digital output.

The Inertial System selected for FLVI would provide this performance;
- Real-Time GPS X,Y,Z Position and Velocity Outputs
- AHRS Pitch, Roll and Heading Output at 100Hz
- GPS Receiver with RTCM and WAAS Compatibilty and Data Synchronization Clock (1 Hz)
- High Stability MEMS Sensors
- Enhanced performance Kalman Filter Algorithm
- EMI & Vibration control
- RS-232 for Transmit & Receive Data
- Gyro: +/- 200 degrees/sec
- Acceleration +/- 4G
- Power input: +9 to 30 VDC
- Digital Output:
   - X/Y/ Z Acceleration
   - Rol / Pitch / Yaw Rate
   - X / Y / Z Magnetic Field
   - Roll /Pitch / Yaw Angle
   - Position / Velocity
   - Buil-In Test

### FLVI AERO VERSIONS:

### AIRCRAFT STATUS MODULE:

Any or all of the following Avionics and Instrumentation:
- AHRS / GPS / DGPS / WAAS/ Magnetometer (explained above)
- ILS avionics
- VOR avionics
- DME avionics
- ADF avionics
- Encoding Altimeter
- Heading Indicator
- Attitude instrumentation
- Autopilot
- Radar
- Inertia Systems

### COMMUNICATION INTERFACE:

- Digital Output Communication Protocol from "Aircraft Status Module" to "Imaging Engine" - Data Transfer 60 to 100Htz

### IMAGING ENGINE

The Image Generator is a computer with a customized OSG viewer (FLVI-View) that uses the onboard navigation information to control the point of view within the synthetic environment and overlay correlated FLIR imagery and TCAS information.

The synthetic environment is composed of selected high-resolution geospecific terrain information to suite the operator needs. The synthetic environment is typically constructed from a combination of:
- Geodetic and elevation data
- Aerial photography and satellite imagery
- Stereo imagery (extraction of cultural features/man-made objects)
- LIDAR data
- GIS (DAFIF, VPF, DFAD, Shape, EUVMap, etc) data
- Hand-held photos and GPS data
- 3D models

The synthetic environment is generated using a combination of highly specialized terrain database construction tools, image processing/GIS software packages, and 3D modeling tools. For aerospace applications, the terrain database will include the terrain and associated cultural/man-made objects located 10NM from the center of the airport.

### DISPLAY:

Any of the following:
- HUD (heads-up display)
- Graphics tablet
- Composite with attitude indicator
- EFIS/MFD (multi-function display)
- Laptop
- Other display devices such as Vision Helmets

### FLVI-Aero Operation:

In a typical aircraft operation the crew would power up the FLVI along with the other avionics during the "prior to taxi checklist". The FLVI would initialize itself according to the Aircraft Status Module and display an image that correlates to the one forward of the aircraft.

The Calibration Module in the FLVI Engine dynamically selects the appropriate and best Navigation information available from the "Aircraft Status Module" to ensure maximum accuracy between the aircraft's real position and the displayed imagery.

When landing at a particular airport, the FLVI-View detects that the aircraft is in the range of the airport (about 10NM) and automatically loads the selected terrain database from memory and syncs with the Aircraft Status Module. The Calibration Model knows the aircraft is about to execute an ILS instrument approach procedure, so it selects the most precise navigation input which is Localizer, Glide slope and Encoder altimetry and compares it with GPS data. The FLVI-View synchronizes the terrain database with the navigation input and displays the synthetic environment to the crew.

The preferred display device is a HUD since it allows the operator to simultaneously see outside the windshield and inside the flight deck without a head movement. The next preferred displayed is a tablet mounted in front of the pilot, like on the yoke. FLVI integration with EFIS/MFD installations would superimpose the image to the NAV display when selected by the crew.

### Typical Sequence of Operation (Aerospace):

In this example, an aircraft is being readied for a night IFR (instrument Flight Rules) departure in an airport surrounded by high terrain and unreliable NAVAIDS (power failures, terrorism). The prevailing weather conditions are indefinite ceiling with a 1/8 mile visibility in fog and mist. The crew, during the avionics phase of the pre-taxi checklist, programs all the navigation systems for the flight. FLVI is then selected and programmed to capture the inputs form the Air data. FLVI-View displays a clear image of the terrain and airport ahead of the aircraft. The pilot uses the imagery as an aid to taxi to the assigned active runway and eventually execute a take off and climb to altitude. The aircraft climbs to its assigned altitude and the crew refers to FLVI-View to avoid high terrain during the IFR published departure procedure (if available).

In the event of a need to abort the climb to altitude and make an emergency landing the imagery provided to the pilot will significantly enhance the safety of the return to the airport for the approach and landing. Continued display of the airport environment will prevent spatial disorientation and contribute to a safe landing avoiding high terrain and other hazards.

After completing the en-route phase of the flight, the aircraft is vectored by ATC to the FAF (final approach fix) of the instrument approach at the destination airport. Weather conditions are very similar to the departure airport.

When the aircraft is within 10 miles of the airport, the FLVI-View displays the airport and surrounding features in a night CAVU (Winter or Summer). Any terrain, vegetation, antennas, etc that could represent a hazard to the flight are displayed as 3D features in the synthetic environment. The runway approach lighting system (if available), runway threshold and lights are shown in the high intensity mode.

The pilot using the primary navigation systems and the FLVI as an aid to spatial orientation continues through the phases of the instrument approach. Looking out of the windshield is a "black hole" but the FLVI continues to provide the pilot with a clear representation of his surroundings. This will help the pilot deal with the consequences of serious deviations from course and altitude and eventually make the decision on whether to miss the approach or to continue on for a successful landing.

After landing the FLVI will continue to provide the imagery that will help to navigate out of the runway and into the taxiways.

The crew can elect to review the flight just completed by requesting from the Crew Interface a "Review previous flight". The corresponding flight parameters are displayed and played-back in the FLVI-View for after-action review.
Systems Engineering:
   OS (Operating System):
   - MS Windows XP Professional
   - Lynux
Processor & Chipset:
   2 Duo Processor 2.00GHz 4MB L2 667MHz 64-bit
Memory:
   2048MB
HDD (Hard Disk Drive):
   100GB 7200RPM Serial ATA (100MB @ typical airport Image)
   ODD (Optical Disk Drive)
   DVD/CD-ROM
Display:
   - Resolution 1280X800
   - Color 32-bit
   - Refresh rate: 60-100Hz
Graphics:
   256MB dedicated graphics memory
Input Devices:
   - Keyboard
Ports:
   - Video: S-Video output
   - Data:
      - communication protocols between:
         - AIRCRAFT STATUS MODULE and IMAGING ENGINE (FLVI-View)
         - IMAGING ENGINE (FLVI-View) and:
            - Precision Avionics & Instrumentation Inputs
            - FLIRlTCAS/Terrain Avoidance Inputs
Physical Description:
   For the purposes of concept evaluation a laptop computer will be used
Power Supply:
   Aircraft power. 14-28V 100W
Battery:
   - to be used as a back-up for aircraft power
Software:
   - OS
   - Communication protocols (3)
   - IG/Viewer
   - Terrain DB
   - Calibration Module/Averaging algorithm
Environmental Specs:
   To correspond with the avionics in the aircraft/vehicle
Physics:
   - Degree of realism related to vehicle dynamics and only unlimited ceiling and visibility condition for day or night in winter or summer season. Color or Black and White.
Type of vehicle:
   - Aerospace
   - Ships and Submarines
   - Ground vehicles civilian & military
Levels of environment:
   - Approach, departure and airport environment
   - Harbor entrances and port environment for ships
   - Oceanographic/bathymetric scenery
   - No virtual hindrances
   - Terrain and man-made imagery
   - Operational surface terrain of particular interest

While the present invention has been related in terms of the foregoing embodiments, those skilled in the art will recognize that the invention is not limited to the embodiments depicted. The present invention can be practiced with modification and alteration within the spirit and scope of the appended claims. Thus, the description is to be regarded as illustrative instead of restrictive on the present invention.

## Claims

1. A method of producing a clear simulated real time display of an actual position and view of surrounds of a vehicle comprising:
sending status data from a vehicle status module to a communication interface;
translating the status data in the communication interface into FLVI status data that a FLVI view can analyze
synchronizing the FLVI status data with imagery data from an imagery database; and
sending the imagery to a display.

2. The method of claim 1 wherein the vehicle status module sends vehicle status data from a selected one of On-Board Avionics & Instrumentation, On-Board Avionics & instrumentation and AHRS, AHRS, and AHRS, GPS and Magnetometer, navigation and navionics.

3. The method of claim 2 wherein the On-Board Avionics & Instrumentation includes AHRS / GPS / DGPS / WAAS/ Magnetometer, Encoding altimetry, Heading Indicator, ILS, LOC, VOR, DME, ADF, FLIR, TCAS, Radar, Attitude instrumentation, Autopilot and any combination of the preceding.

4. The method of claim 1 wherein the FLVI Engine is computer hardware including an image generator, photo-realism scenery imaging DB and operator interface.

5. The method of claim 1 wherein the forward looking virtual imaging engine comprises a high clock speed computer, high speed memory, high speed storage and a graphics accelerator board, and
wherein the forward looking virtual imaging engine comprises an operator interface, image management software, an averaging algorithm and a photo-realism database.

6. The method of claim 1 wherein the display is co-located with other EFIS navigation instrumentation.

7. The method of claim 1 wherein the FLVI Engine is computer hardware including an image generator, photo-realism scenery imaging DB and operator interface.

8. The method of claim 1 wherein the FLVI Engine concept is used in aerospace, maritime surface and submarines, surface civil and military applications.

9. The forward looking virtual imaging system of claim 1, wherein the display device comprises one or more of the following display systems: a graphics tablet, a heads-up display, a composite with attitude indicator, an electronic flight instrumentation system, a navigation display, a laptop, a night vision device, vision helmet and an infrared vision system.

10. The method of claim 1, wherein the windshield is on a vehicle that is an aircraft, and the position data comprises geo-positional-altitude-universal time date data, elevation, heading, velocity/acceleration and attitude in pitch, roll and yaw.
